# EUROPEAN PATENT APPLICATION

(11) **EP 4 830 990 A1**
(43) Date of publication of application: **28.10.2026**
(21) Application number: 26173567.4
(22) Date of filing: 21.04.2026
(51) Int. Cl.: B60N 2/02, B60N 2/06, B60N 2/07, B60N 2/68

(54) **VEHICLE SEAT**

(30) Priority: 23.04.2025 JP 2025071312
(71) Applicant: TS Tech Co., Ltd., Asaka-shi, Saitama 351-0012 (JP); Suzuki Motor Corporation, Hamamatsu-shi, Shizuoka 432-8611 (JP)
(72) Inventor: TANIGUCHI, Hiromi, Tochigi, 329-1217 (JP); SUZUKI, Satoshi, Tochigi, 329-1217 (JP); IKEDA, Hiroyuki, Hamamatsu-shi, 432-8611 (JP); WADA, Hirotaka, Hamamatsu-shi, 432-8611 (JP); SANO, Yuma, Hamamatsu-shi, 432-8611 (JP)
(74) Representative: Plougmann Vingtoft a/s

(57) **Abstract**

A vehicle seat includes a motor (100), a bracket (200) to which the motor (100) is fixed, and a cover (300) configured to cover the motor (100). The cover (300) includes a first cover (310) configured to cover a portion of the motor (100) on one side of the motor (100) in a perpendicular direction perpendicular to an axial direction along which a rotary shaft (120) of the motor (100) extends and a second cover (320) configured to cover a portion of the motor (100) on the other side of the motor (100) in the perpendicular direction. The first cover (310) and the second cover (320) are fixed to the bracket (200).

## Description

### TECHNICAL FIELD

The present invention relates to a vehicle seat.

### BACKGROUND ART

A car seat known in the art includes a motor, a bracket holding the motor, and a cover configured to cover the motor (JP2010-052495A). In such a car seat, the cover is formed to be long in the left-right direction and narrow in the front-rear direction, and covers a front portion of the motor.

### SUMMARY OF INVENTION

In such a configuration, the cover covers only the front portion of the motor and a rear portion of the motor is exposed, which results in poor aesthetic appearance.

Accordingly, it is desirable to improve the aesthetic appearance of the cover.

A vehicle seat includes a motor, a bracket to which the motor is fixed, and a cover configured to cover the motor.

The cover includes a first cover configured to cover a portion of the motor on one side of the motor in a perpendicular direction perpendicular to an axial direction along which a rotary shaft of the motor extends, and a second cover configured to cover a portion of the motor on the other side of the motor in the perpendicular direction.

The first cover and the second cover are fixed to the bracket.

Since the cover includes the first cover configured to cover the portion of the motor on the one side of the motor in the perpendicular direction and the second cover configured to cover the portion of the motor on the other side of the motor in the perpendicular direction, the motor fixed to the bracket is covered with the cover extending over an entire circumference about the axial direction. Thus, appearance is improved.

The first cover may include an engaging portion configured to engage with the bracket, and the second cover may cover the engaging portion.

Since the first cover includes the engaging portion configured to engage with the bracket, the first cover is easily fixed to the bracket. Since the second cover covers the engaging portion of the first cover, detachment of the first cover from the bracket is suppressed.

The first cover may cover a lower portion of the motor, and the second cover may cover an upper portion of the motor.

Since the first cover covers the lower portion of the motor and the second cover covers the upper portion of the motor, detachment of the cover from the bracket is suppressed.

The bracket may extend in a left-right direction. The bracket may have a bracket hole extending through the bracket in an up-down direction. The motor may be received in the bracket hole.

In a configuration in which the first cover and the second cover cover the motor from below and from above and are fixed to the bracket, since the motor is received in the bracket hole of the bracket, the cover is made compact.

The vehicle seat may further include a slide mechanism supporting a seat body on which an occupant is seated in a manner that allows the seat body to move in a front-rear direction. The motor may be configured to drive the slide mechanism. The slide mechanism may include left and right lower rails fixed to a floor of a vehicle, and left and right upper rails slidably supported by the left and right lower rails. The bracket may be fixed to and bridge the left and right upper rails.

Since the bracket is fixed to and bridges the left and right upper rails, a member to which the bracket is fixed is not disposed above or below the bracket. Thus, attachment and detachment work of the first cover and the second cover is facilitated, and assemblability and disassemblability of the cover is improved.

The bracket may include a first bracket wall having the bracket hole, and second bracket walls extending downward from a front end and a rear end of the first bracket wall. A maximum dimension in the up-down direction of a portion of each of the second bracket walls that overlap the cover as viewed in the front-rear direction may be larger than a maximum dimension in the up-down direction of a portion of each of the second bracket walls that do not overlap the cover as viewed in the front-rear direction.

Since the maximum dimensions in the up-down direction of the portions of the second bracket walls that overlap the cover as viewed in the front-rear direction are larger than the maximum dimensions in the up-down direction of the portions of the second bracket walls that do not overlap the cover as viewed in the front-rear direction, rigidity of portions of the bracket that overlap the cover as viewed in the front-rear direction is improved.

The first cover and the second cover may be positioned within a width of the bracket in the front-rear direction.

Since the first cover and the second cover are positioned within the width of the bracket in the front-rear direction, the cover is made compact in the front-rear direction.

The second cover may include a first lock tab protruding in a left-right direction and engaging with the bracket and a boss protruding downward and fitted in a hole in the bracket. The first lock tab is positioned at an end portion of the second cover on one side in the left-right direction. The boss is positioned at an end portion of the second cover on another side in the left-right direction.

Since the second cover includes the first lock tab protruding in the left-right direction and engaged with the bracket and the boss protruding downward and fitted in the hole in the bracket, a front-rear position and a left-right position of the second cover with respect to the bracket are restricted.

The boss may have a cross-shaped cross section.

Since the boss has the cross-shaped cross section, rigidity of the boss is improved.

The second cover may include a first hook and a second hook protruding downward, and each includes a second lock tab at an end portion thereof. The second lock tab of the first hook may protrude in a direction away from the second hook and engage with the bracket, and the second lock tab of the second hook may protrude in a direction away from the first hook and engage with the bracket. A portion of the first cover may be fitted between the first hook and the second hook.

Since the portion of the first cover is fitted between the first hook and the second hook of the second cover, deformation of the end portions of the first hook and the second hook in a direction approaching each other is suppressed by the first cover. Thus, removal of the second cover from the bracket is suppressed.

The motor may include a projecting piece protruding downward, and the first cover may have a cover hole in which the projecting piece is fitted.

Since the motor includes the projecting piece protruding downward and the first cover has the cover hole in which the projecting piece is fitted, a front-rear position and a left-right position of the first cover are restricted with respect to the motor.

Since the motor fixed to the bracket is covered with the cover extending over the entire circumference about the axial direction, aesthetic appearance of the cover can be improved.

### BRIEF DESCRIPTION OF DRAWINGS

FIG. 1 is a perspective view showing a vehicle seat according to an embodiment.
FIG. 2 is a perspective view showing a slide mechanism, a bracket, and a cover.
FIG. 3 is a perspective view showing a motor, the bracket, a first cover, and a second cover.
FIG. 4 is a perspective view showing the motor and a right end portion of the bracket.
FIG. 5 is a view of the bracket and the cover as viewed from the front.
FIG. 6 is a perspective view showing the first cover.
FIG. 7 is a perspective view showing the second cover.
FIG. 8 is a perspective view of the right end portion of the bracket and the cover as viewed from the rear.
FIG. 9 is a partial cross-sectional view showing the right end portion of the bracket and the cover.
FIG. 10 is a cross-sectional view taken along line A-A in FIG. 9.
FIG. 11 is a cross-sectional view taken along line B-B in FIG. 9.
FIG. 12 is a cross-sectional view taken along line C-C in FIG. 9.
FIG. 13 is a cross-sectional view taken along line D-D in FIG. 9.
FIG. 14A is a view of the right end portion of the bracket and the cover as viewed from above.
FIG. 14B is a view of the right end portion of the bracket and the cover as viewed from below.

### DESCRIPTION OF EMBODIMENTS

Next, an embodiment of the present disclosure will be described in detail with reference to the drawings as appropriate.

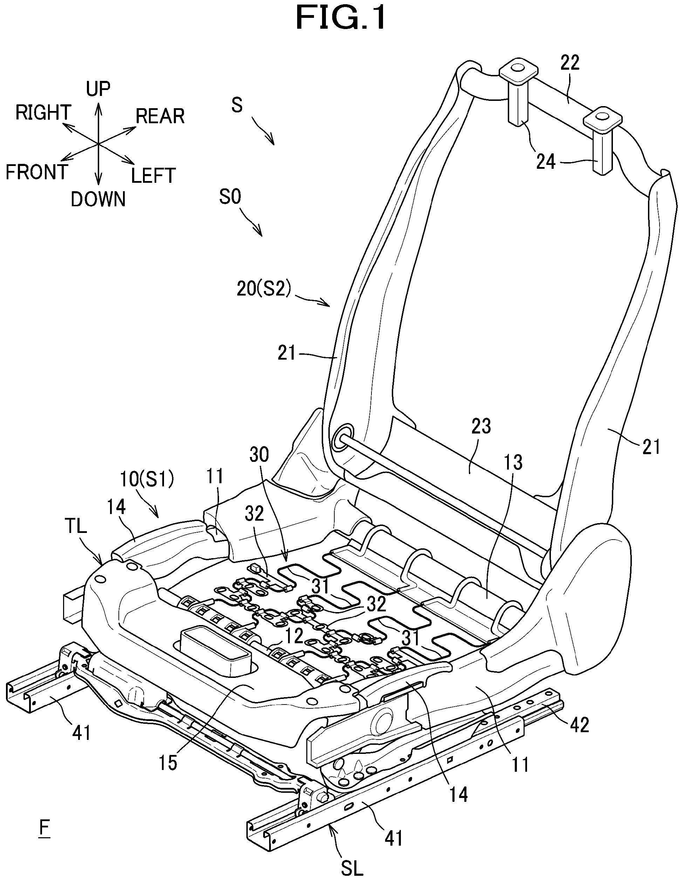

As shown in FIG. 1, a vehicle seat according to the embodiment is a car seat S mounted on an automobile as an example of a vehicle. The car seat S includes a seat body S0 on which a person is seated. The seat body S0 includes a seat cushion S1, a seat back S2, and a headrest (not shown).

In the present specification, front-rear, left-right, and up-down directions correspond to front-rear, left-right, and up-down directions as viewed from a person sitting on the seat (an occupant). In the embodiment, the left-right direction corresponds to "the axial direction along which the rotary shaft of the motor extends." The up-down direction corresponds to "the perpendicular direction perpendicular to the axial direction" (radial direction).

The seat cushion S1 constitutes a seat bottom of the vehicle seat, and includes a seat cushion frame 10 and a pressure-receiving member 30. The seat cushion S1 is formed by covering the seat cushion frame 10 with a seat cushion pad (not shown) and a seat cushion outer covering (not shown). The "seat cushion" refers to a seat bottom of a vehicle seat regardless of whether it includes a cushion material such as the seat cushion pad.

The seat cushion frame 10 includes left and right seat cushion side frames 11, a front frame 12, and a rear frame 13.

The seat cushion side frames 11 have a shape long in the front-rear direction. The left and right seat cushion side frames 11 are disposed at positions spaced apart from each other in the left-right direction. The front frame 12 connects front portions of the left and right seat cushion side frames 11. The rear frame 13 connects rear portions of the left and right seat cushion side frames 11. The front frame 12 and the rear frame 13 are disposed at positions spaced apart from each other in the front-rear direction.

The pressure-receiving member 30 is a member that receives a load from an occupant. The pressure-receiving member 30 includes a plurality of wires 31 and a plurality of plastic members 32. The wires 31 are made of metal wire rods. The wires 31 extend in the front-rear direction while being alternately bent in the left-right direction. The wires 31 are disposed between the left and right seat cushion side frames 11 in a state of being bridged over the front frame 12 and the rear frame 13. The plurality of wires 31 are disposed side-by-side in the left-right direction. The plastic members 32 are made of plastic. The plastic members 32 are integrally formed with the wires 31 in a state of covering an entire circumference of a portion of each wire 31 by insert molding. The plastic members 32 are provided to connect the plurality of wires 31 to each other, or to connect one portion and another portion of a single wire 31 to each other.

The seat back S2 includes a seat back frame 20. The seat back S2 is formed by covering the seat back frame 20 with a seat back pad (not shown) and a seat back outer covering (not shown).

The seat back frame 20 includes left and right seat back side frames 21, an upper frame 22, and a lower frame 23.

The seat back side frames 21 have a shape long in the up-down direction. The left and right seat back side frames 21 are disposed at positions spaced apart from each other in the left-right direction. The upper frame 22 connects upper portions of the left and right seat back side frames 21. The lower frame 23 connects lower portions of the left and right seat back side frames 21. The upper frame 22 and the lower frame 23 are disposed at positions spaced apart from each other in the up-down direction. A pair of headrest holders 24 for holding the headrest are fixed to the upper frame 22.

The car seat S further includes a slide mechanism SL and a tilt mechanism TL.

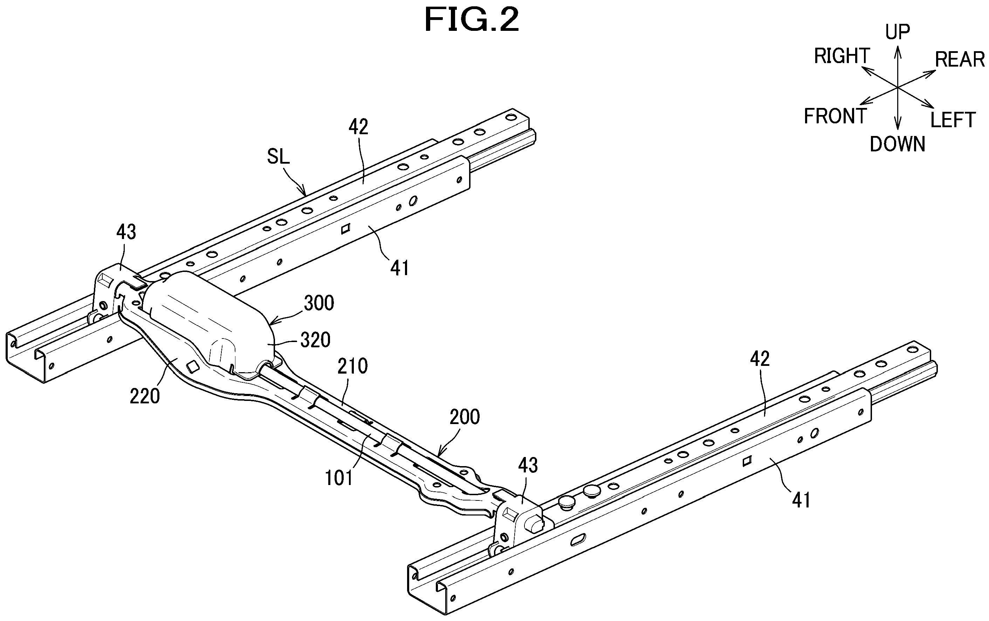

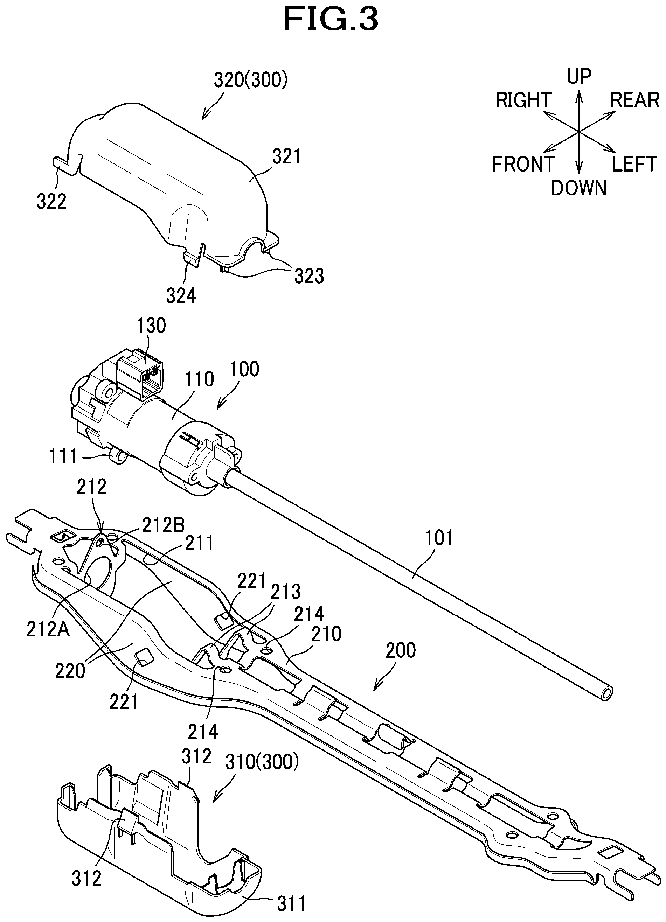

The slide mechanism SL is a mechanism that supports the seat body S0 in a manner that allows the seat body S0 to move in the front-rear direction. The slide mechanism SL includes left and right lower rails 41 and left and right upper rails 42 (see also FIG. 2). The lower rails 41 are fixed to a floor F of the automobile. The upper rails 42 are supported by the lower rails 41 in a slidable manner. The upper rails 42 are connected to the seat cushion side frames 11. In the car seat S, the seat body S0 is movable in the front-rear direction by moving the upper rails 42 in the front-rear direction by a motor 100 (see FIG. 3).

The tilt mechanism TL is a mechanism that supports a front portion of the seat cushion S1 in a manner that allows the front portion of the seat cushion S1 to move in the up-down direction. The tilt mechanism TL includes left and right tilt links 14 and a pan frame 15. The tilt links 14 have rear end portions pivotably connected to the seat cushion side frames 11 so that front portions thereof are pivotable in the up-down direction. The pan frame 15 is fixed to the tilt links 14. In the car seat S, the front portions of the tilt links 14 are pivoted in the up-down direction by a motor (not shown) different from the motor 100, and thus the front portion of the seat cushion S1 is movable in the up-down direction.

As shown in FIG. 2, the car seat S further includes the motor 100 (see FIG. 3), a bracket 200 to which the motor 100 is fixed, and a cover 300 covering the motor 100.

The bracket 200 is made of a metal plate. The bracket 200 extends in the left-right direction. The bracket 200 is fixed to and bridges the left and right upper rails 42.

Specifically, a right end portion of the bracket 200 is fixed to the right upper rail 42, and a left end portion of the bracket 200 is fixed to the left upper rail 42. More specifically, mounting brackets 43 are attached to upper surfaces of the upper rails 42, respectively. The right end portion of the bracket 200 is fixed to the mounting bracket 43 attached to the right upper rail 42, and the left end portion of the bracket 200 is fixed to the mounting bracket 43 attached to the left upper rail 42. The bracket 200 is held by the left and right mounting brackets 43.

As shown in FIG. 3, the cover 300 includes a first cover 310 and a second cover 320. The first cover 310 and the second cover 320 are each made of plastic. In the embodiment, the first cover 310 covers a portion of the motor 100 on one side in the up-down direction, and the second cover 320 covers a portion of the motor 100 on the other side in the up-down direction. Specifically, the first cover 310 covers a lower portion of the motor 100, and the second cover 320 covers an upper portion of the motor 100. The first cover 310 and the second cover 320 are each fixed to the bracket 200.

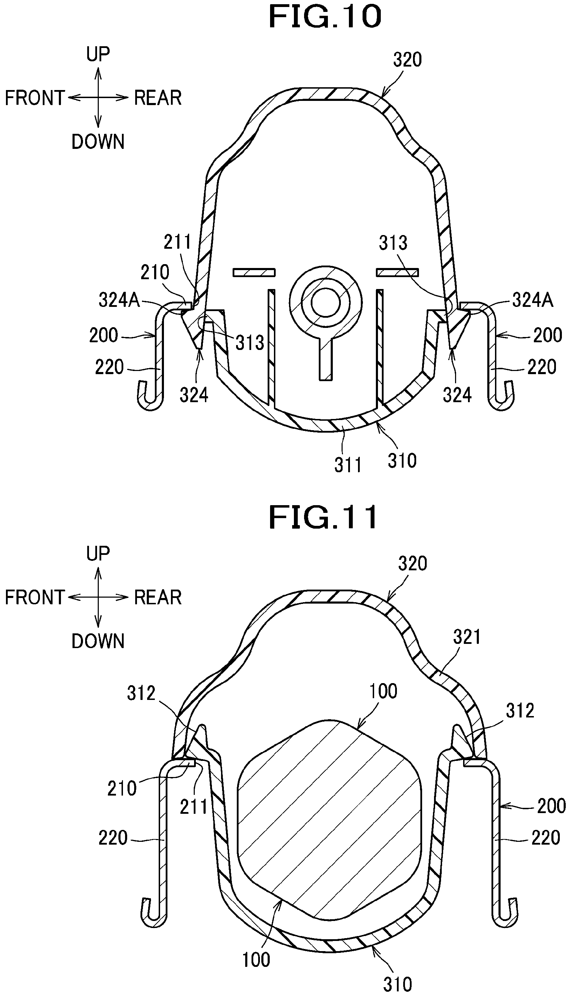

The bracket 200 includes a first bracket wall 210 and second bracket walls 220. The first bracket wall 210 is an upper wall of the bracket 200. The second bracket walls 220 are front and rear walls of the bracket 200, and extend downward from front and rear ends of the first bracket wall 210. Lower end portions of the second bracket walls 220 are folded back outward in the front-rear direction (see also FIG. 10 and other figures). Thus, rigidity of the bracket 200 is improved.

Outward in the front-rear direction means farther from a central portion of the bracket 200 in the front-rear direction, and inward in the front-rear direction means closer to the central portion of the bracket 200 in the front-rear direction.

The first bracket wall 210 includes a bracket hole 211, a motor fixing portion 212, a pair of cut-and-bent portions 213, and a pair of boss fitting holes 214.

The bracket hole 211 is a hole extending through the first bracket wall 210 in the up-down direction. Dimensions of the bracket hole 211 in the front-rear direction and the left-right direction are dimensions that allow at least a housing 110 of the motor 100 to pass through the bracket hole 211. The bracket hole 211 is positioned at a right end portion of the first bracket wall 210.

The motor fixing portion 212 is a plate-shaped portion to which the motor 100 is fixed. The motor fixing portion 212 is formed by cutting and bending a metal plate. The motor fixing portion 212 is positioned rightward of the bracket hole 211. The motor fixing portion 212 includes a first through hole 212A and a second through hole 212B positioned above the first through hole 212A. The first through hole 212A and the second through hole 212B are holes extending through the motor fixing portion 212 in the left-right direction.

The cut-and-bent portions 213 are positioned leftward of the bracket hole 211. The cut-and-bent portions 213 are formed by cutting and bending a metal plate. Each cut-and-bent portion 213 has a shape extending upward from a left edge of the bracket hole 211, being bent in a U-shape, and extending downward. The pair of cut-and-bent portions 213 are disposed side-by-side in the front-rear direction.

The boss fitting holes 214 are holes extending through the first bracket wall 210 in the up-down direction. The boss fitting holes 214 are positioned at a left edge of the bracket hole 211. The boss fitting holes 214 are positioned leftward of the cut-and-bent portions 213. The pair of boss fitting holes 214 are disposed side-by-side in the front-rear direction.

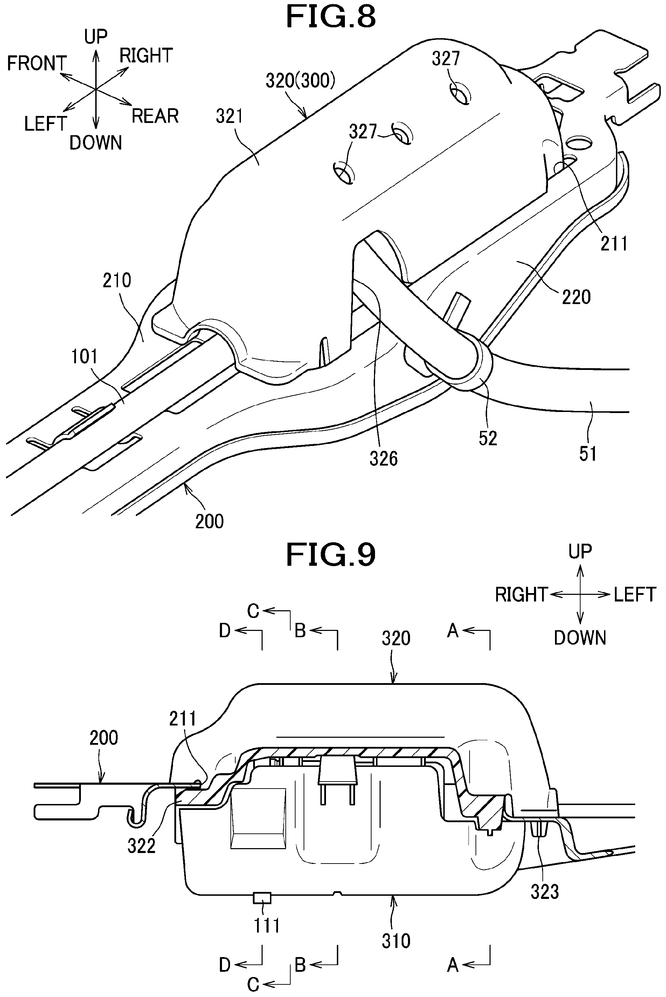

The front and rear second bracket walls 220 have a substantially symmetric structure in the front-rear direction. Each second bracket wall 220 includes a mounting hole 221. The mounting hole 221 is a hole extending through each second bracket wall 220 in the front-rear direction. For example, a harness clip 52 for fixing a harness 51 (see FIG. 8) is attached to the mounting hole 221.

The motor 100 is a motor configured to drive the slide mechanism SL. The motor 100, when driven, moves the upper rails 42 of the slide mechanism SL in the front-rear direction with respect to the lower rails 41. The motor 100 is a double-shaft motor. A connection shaft 101 for transmitting a driving force to the left upper rail 42 is connected to the motor 100.

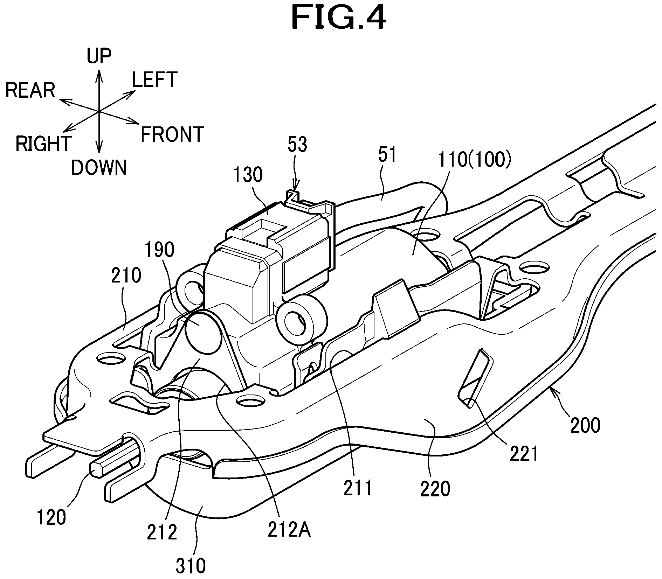

As shown in FIG. 4, the motor 100 is received in the bracket hole 211. Specifically, the motor 100 is fixed to the bracket 200 in a state of being received in the bracket hole 211. The motor 100 is fixed to the bracket 200 in a state in which at least the housing 110 is inserted through the bracket hole 211. The motor 100 is fixed to the bracket 200 by engaging a right end portion of the housing 110 with the first through hole 212A of the motor fixing portion 212 and fastening a screw 190 to the housing 110 of the motor 100 through the second through hole 212B (see FIG. 3) of the motor fixing portion 212.

The motor 100 includes the housing 110, a rotary shaft 120, and a motor connector 130 (see also FIG. 3).

The housing 110 houses a driving portion (not shown) that generates a driving force by electric power supplied from the motor connector 130. In other words, the driving portion is provided in the housing 110. The driving portion includes a stator (fixed element) having a coil that generates a magnetic flux by electric power, and a rotor (movable element) that generates a driving force (rotational force) by action of the magnetic flux. The rotor is supported via a bearing or the like in a rotatable manner with respect to the stator. The rotary shaft 120 is fixed to the rotor.

The rotary shaft 120 outputs a driving force generated by the driving portion. The rotary shaft 120 extends in the left-right direction.

The motor connector 130 is located at an upper portion of the motor 100. The motor connector 130 is provided on the housing 110. The motor connector 130 is a connector to which the harness 51 for supplying electric power to the motor 100 is connected. Specifically, a harness connector 53 fixed to one end of the harness 51 is connected to the motor connector 130.

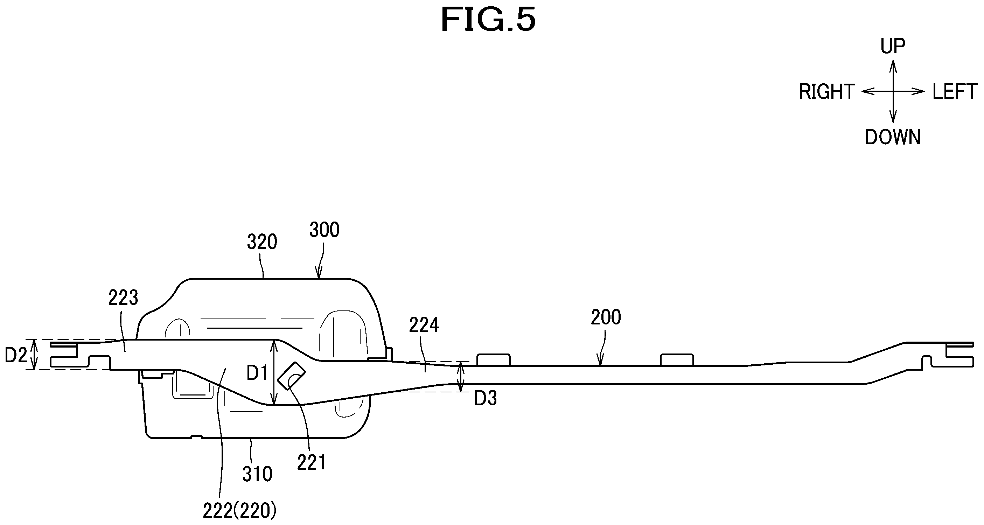

As shown in FIG. 5, each second bracket wall 220 includes a bulging portion 222, a first side portion 223, and a second side portion 224. The bulging portion 222 is a portion of the corresponding second bracket wall 220 located in a position that overlaps the cover 300 as viewed in the front-rear direction. The mounting hole 221 is formed in the bulging portion 222. The side portions 223 and 224 are portions positioned leftward and rightward, respectively, of the cover 300 as viewed in the front-rear direction. Specifically, the first side portion 223 is a portion positioned rightward of the cover 300 as viewed in the front-rear direction, and the second side portion 224 is a portion positioned leftward of the cover 300 as viewed in the front-rear direction.

In each second bracket wall 220, a maximum dimension D1 of the bulging portion 222 in the up-down direction is larger than a maximum dimension D2 of the first side portion 223 in the up-down direction. Further, in each second bracket wall 220, the maximum dimension D1 of the bulging portion 222 in the up-down direction is larger than a maximum dimension D3 of the second side portion 224 in the up-down direction. The bulging portion 222 has a shape bulging in the up-down direction with respect to the side portions 223 and 224. Specifically, the bulging portion 222 has a shape bulging downward with respect to lower edges of the side portions 223 and 224 as the bulging portion 222 is farther from the side portions 223 and 224 in the left-right direction. An upper edge of the bulging portion 222 and an upper edge of the first side portion 223 are substantially at the same position in the up-down direction. A left portion of the bulging portion 222 has a shape inclined upward with respect to an upper edge of the second side portion 224 as the left portion is farther from the second side portion 224 in the left-right direction.

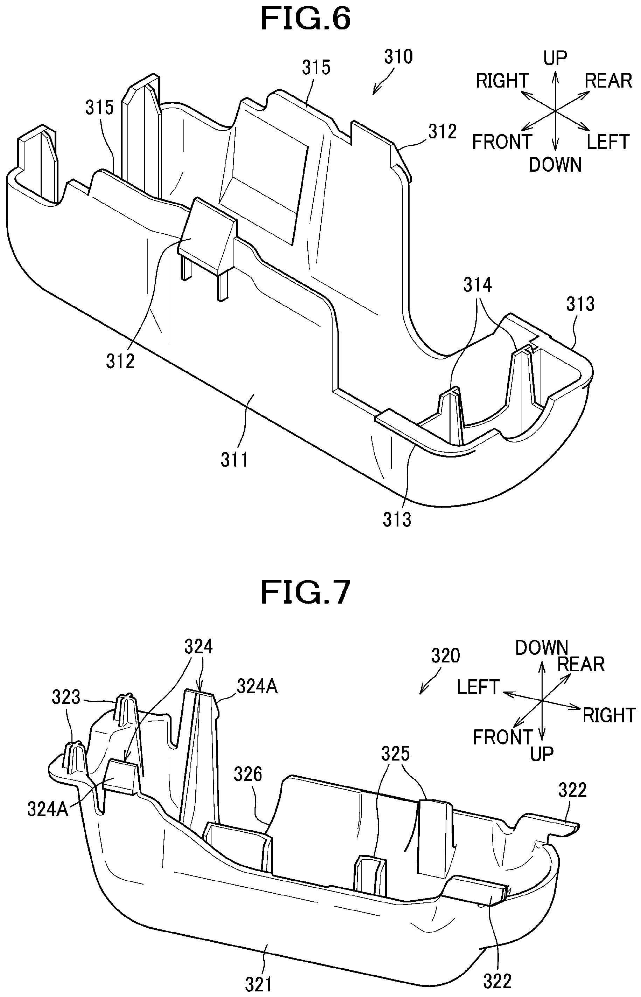

As shown in FIG. 6, the first cover 310 includes a first cover body 311, a pair of engaging portions 312, a pair of flanges 313, a pair of ribs 314, and a pair of first end portions 315. The first cover body 311 has a box shape including a lower wall and peripheral walls extending upward from a peripheral edge of the lower wall.

The engaging portions 312 are portions configured to engage with the bracket 200. The engaging portions 312 are positioned near a central portion of the first cover 310 in the left-right direction. Each engaging portion 312 protrudes upward and outward in the front-rear direction from a front wall or a rear wall of the first cover body 311. The front surface of the engaging portion 312 on the front wall and the rear surface of the engaging portion 312 on the rear wall are inclined with respect to the front-rear direction such that the surfaces are positioned further inward in the front-rear direction toward an upper side of the first cover body 311. Each engaging portion 312 has a tapered shape in which a dimension in the front-rear direction decreases toward the upper side of the first cover body 311.

The flanges 313 and the ribs 314 are positioned at a left end portion of the first cover 310. Each flange 313 protrudes outward in the front-rear direction from an upper edge portion of the front wall or the rear wall of the first cover body 311. Each flange 313 extends in the left-right direction. The ribs 314 are positioned between the pair of flanges 313. Each rib 314 extends upward from the lower wall of the first cover body 311. The pair of ribs 314 are disposed side-by-side in the front-rear direction with a spacing therebetween in the front-rear direction. The connection shaft 101 (see FIG. 3) is disposed to pass between the pair of ribs 314. In a state in which the first cover 310 is attached to the bracket 200, the ribs 314 enter inside the cut-and-bent portions 213 (see FIG. 3).

The first end portions 315 are portions, of upper end portions of the front wall and the rear wall of the first cover body 311, that are positioned rightward of the engaging portions 312. The first end portions 315 extend in the left-right direction. The pair of first end portions 315 face each other in the front-rear direction.

As shown in FIG. 7, the second cover 320 includes a second cover body 321, a pair of first lock tabs 322, a pair of bosses 323, a pair of hooks 324 as the first hook and the second hook, a pair of ribs 325, and a notch 326. The second cover body 321 has a box shape including an upper wall and peripheral walls extending downward from peripheral edges of the upper wall.

The first lock tabs 322 are positioned at an end portion of the second cover 320 on one side in the left-right direction, and the bosses 323 are positioned at an end portion of the second cover 320 on the other side in the left-right direction. In the embodiment, the first lock tabs 322 are positioned at the right end portion of the second cover 320, and the bosses 323 are positioned at the left end portion of the second cover 320. The first lock tabs 322 protrude in the left-right direction. In the embodiment, the first lock tabs 322 protrude downward and then rightward from the right end portion of the second cover body 321. The pair of first lock tabs 322 are disposed side-by-side in the front-rear direction. The bosses 323 protrude downward from the left end portion of the second cover body 321. The bosses 323 have a cross-shaped cross section. The pair of bosses 323 are disposed side-by-side in the front-rear direction.

The hooks 324 are positioned at the left end portion of the second cover 320. The hooks 324 are positioned rightward of the bosses 323. The hooks 324 protrude downward from the left end portion of the second cover body 321. The hooks 324 each include a second lock tab 324A at an end portion (a lower end portion) thereof. The second lock tabs 324A are portions configured to engage with the bracket 200. Each second lock tab 324A protrudes in a direction away from the other second lock tab 324A. In the embodiment, the second lock tabs 324A protrude outward in the front-rear direction. The front surface of the second lock tab 324A on the front wall of the second cover body 321 and the rear surface of the second lock tab 324A on the rear wall of the second cover body 321 are inclined with respect to the front-rear direction such that the surfaces are positioned further inward in the front-rear direction toward a lower side of the second cover body 321. Each second lock tab 324A has a tapered shape in which a dimension in the front-rear direction decreases toward the lower side of the second cover body 321.

The ribs 325 are positioned between the first lock tabs 322 and the hooks 324 in the left-right direction. The ribs 325 extend downward from the upper wall of the second cover body 321. The pair of ribs 325 are disposed side-by-side in the front-rear direction with a spacing therebetween in the front-rear direction.

The notch 326 is formed in a rear wall of the second cover 320. As shown in FIG. 8, the notch 326 is a notch for drawing the harness 51 connected to the motor 100 out of the cover 300.

The second cover 320 further includes a plurality of heat dissipation holes 327. The heat dissipation holes 327 are holes extending through the second cover 320 in the up-down direction. The heat dissipation holes 327 are positioned in the upper wall of the second cover body 321. The plurality of heat dissipation holes 327 are aligned in the left-right direction. With the heat dissipation holes 327, heat generated by the motor 100 is released out of the cover 300.

In the embodiment, the cover 300 is attached to the bracket 200 in the order of the second cover 320 and the first cover 310. In other words, the cover 300 is attached such that the second cover 320 is first attached to the bracket 200, and thereafter the first cover 310 is attached to the bracket 200.

As shown in FIG. 9, in a state in which the second cover 320 is attached to the bracket 200, the first lock tabs 322 engage with the bracket 200. Specifically, the first lock tabs 322 extend under a right edge of the bracket hole 211 and engage with the bracket 200. Further, in a state in which the second cover 320 is attached to the bracket 200, the bosses 323 are fitted in the boss fitting holes 214 (see FIG. 3), which are holes in the bracket 200.

As shown in FIG. 10, in a state in which the second cover 320 is attached to the bracket 200, the hooks 324 engage with the bracket 200 via the second lock tabs 324A. Specifically, the second lock tabs 324A extend under a front edge or a rear edge of the bracket hole 211 and engage with the bracket 200. The second cover 320 is fixed to the bracket 200 by engagement of the pair of hooks 324 with the bracket 200.

In a state in which the first cover 310 is attached to the bracket 200, a portion of the first cover 310 is fitted between end portions of the pair of hooks 324 of the second cover 320. Specifically, the first cover 310 is fitted such that the pair of flanges 313 are fitted between the end portions of the pair of hooks 324.

As shown in FIG. 11, in a state in which the first cover 310 is attached to the bracket 200, the engaging portions 312 engage with the bracket 200. Specifically, the engaging portions 312 engage with the bracket 200 in a state in which the engaging portions 312 are hooked on an upper side of a front edge or a rear edge of the bracket hole 211. The first cover 310 is fixed to the bracket 200 by engagement of the engaging portions 312 with the bracket 200.

The second cover 320 covers the engaging portions 312 of the first cover 310. Specifically, the second cover body 321 of the second cover 320 covers the engaging portions 312 from above. The engaging portions 312 are not visible from above due to being covered by the second cover 320.

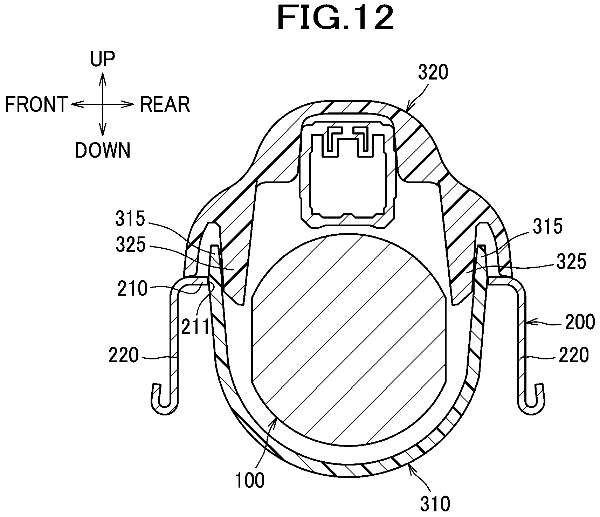

As shown in FIG. 12, a portion of the second cover 320 is fitted between the pair of first end portions 315 of the first cover 310. Specifically, the second cover 320 is fitted such that the ribs 325 are fitted between the pair of first end portions 315.

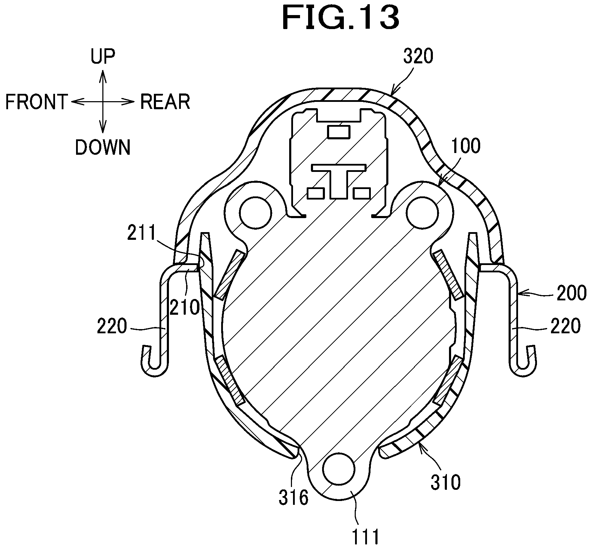

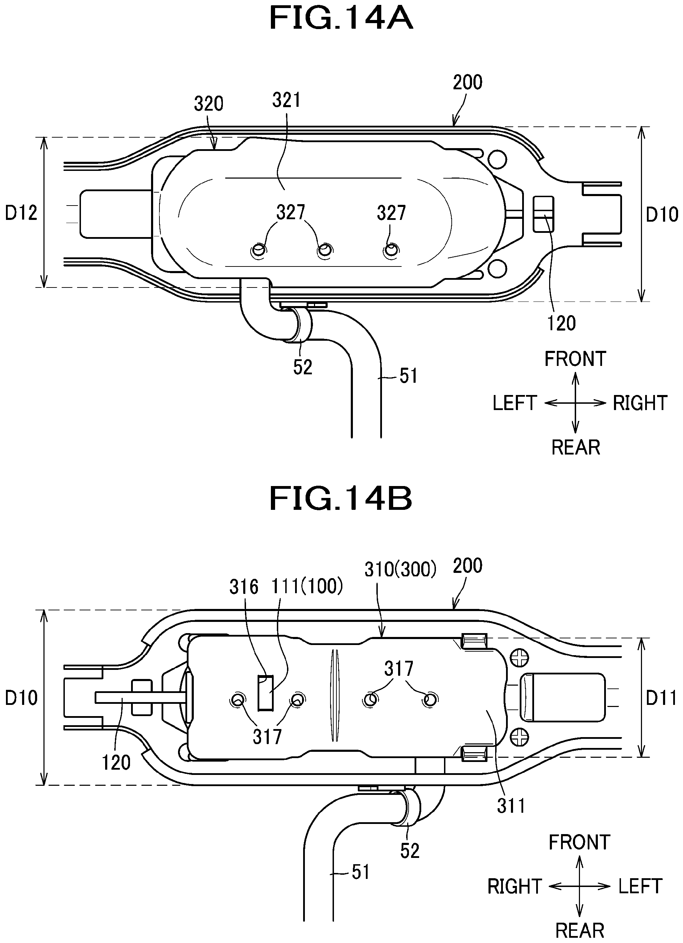

As shown in FIG. 13, the motor 100 includes a projecting piece 111. The projecting piece 111 protrudes downward. In the embodiment, the projecting piece 111 has a plate shape thin in the left-right direction. The first cover 310 has a cover hole 316. The cover hole 316 is a hole extending through the first cover 310 in the up-down direction. A dimension of the cover hole 316 in the front-rear direction is larger than a dimension of the cover hole 316 in the left-right direction (see FIG. 14B). In a state in which the motor 100 and the first cover 310 are attached to the bracket 200, the projecting piece 111 is fitted in the cover hole 316.

As shown in FIGS. 14A and 14B, the first cover 310 and the second cover 320 are each positioned within the width of the bracket 200 in the front-rear direction. Specifically, as shown in FIG. 14A, the second cover 320 has a maximum dimension D12 in the front-rear direction that is smaller than a maximum dimension D10 of the bracket 200 in the front-rear direction. The second cover 320 is positioned rearward of a front end of the bracket 200 and is positioned frontward of a rear end of the bracket 200. Similarly, as shown in FIG. 14B, the first cover 310 has a maximum dimension D11 in the front-rear direction that is smaller than the maximum dimension D10 of the bracket 200 in the front-rear direction. The first cover 310 is positioned rearward of the front end of the bracket 200 and is positioned frontward of the rear end of the bracket 200.

The first cover 310 further includes a plurality of heat dissipation holes 317. The heat dissipation holes 317 are holes extending through the first cover 310 in the up-down direction. The heat dissipation holes 317 are positioned in the lower wall of the first cover body 311. The plurality of heat dissipation holes 317 are aligned in the left-right direction. The cover hole 316 and the plurality of heat dissipation holes 317 are aligned in the left-right direction. With the heat dissipation holes 317, heat generated by the motor 100 is released out of the cover 300.

Next, advantageous effects of the embodiment will be described.

Since the cover 300 includes the first cover 310 covering the lower portion of the motor 100 and the second cover 320 covering the upper portion of the motor 100, the motor 100 fixed to the bracket 200 is covered with the cover 300 extending over an entire circumference around the motor 100 in the left-right direction. Thus, aesthetic appearance is improved. Further, since the motor 100 is covered with the cover 300 extending over the entire circumference of the motor 100 about the left-right direction, sound insulation can be improved.

Further, since the cover 300 includes the first cover 310 covering the lower portion of the motor 100 and the second cover 320 covering the upper portion of the motor 100, one of the first cover 310 and the second cover 320 is attachable to and detachable from the bracket 200 in a state in which the other is fixed to the bracket 200. Thus, assemblability and disassemblability of the cover 300 are improved. Further, since assemblability and disassemblability of the cover 300 are improved, maintainability of the motor 100 is improved. Further, since the cover 300 is attachable to and detachable from the bracket 200 in a state in which the motor 100 is fixed to the bracket 200, assemblability and disassemblability of the cover 300 are improved.

Since the first cover 310 includes the engaging portions 312 configured to engage with the bracket 200, as compared with, for example, a configuration in which the first cover is fixed to the bracket by screws or the like instead of the engaging portions 312, the first cover 310 is easily fixed to the bracket 200. Since the second cover 320 covers the engaging portions 312 of the first cover 310, it is possible to keep a person from directly touching the engaging portions 312 or an object from directly hitting the engaging portions 312, and thus detachment of the first cover 310 from the bracket 200 is suppressed.

Since the first cover 310 covers the lower portion of the motor 100 and the second cover 320 covers the upper portion of the motor 100, after the car seat S is mounted on the automobile, the first cover 310 is less likely to move downward since the floor F of the automobile is present under the first cover 310. Further, the second cover 320 is less likely to move upward because the seat cushion S1 is present above the second cover 320. That is, the first cover 310 and the second cover 320 are less likely to move in a detachment direction. Thus, for example, even when a person touches the cover 300 or an object hits the cover 300, detachment of the cover 300 from the bracket 200 is suppressed.

In the configuration in which the first cover 310 and the second cover 320 cover the motor 100 from below and from above and are fixed to the bracket 200, since the motor 100 is received in the bracket hole 211 of the bracket 200, the cover 300 is made compact.

More specifically, for example, when the motor is not received in the bracket hole and is fixed to a lower surface of the bracket, it will be necessary to extend the first cover upward to the bracket in order to fix the first cover covering the lower portion of the motor to the bracket, and thus the first cover will become large. Similarly, when the motor is fixed to an upper surface of the bracket, it will be necessary to extend the second cover downward to the bracket in order to fix the second cover covering the upper portion of the motor to the bracket, and thus the second cover will become large. Since the motor 100 is received in the bracket hole 211 of the bracket 200, the first cover 310 and the second cover 320 are made compact, and thus the cover 300 is made compact.

Since the bracket 200 is fixed to and bridges the left and right upper rails 42, a member to which the bracket 200 is fixed is not disposed above and below the bracket 200. Thus, attachment and detachment work of the first cover 310 and the second cover 320 is facilitated, and assemblability and disassemblability are improved.

More specifically, for example, in an alternative embodiment in which the bracket is fixed to an upper surface of one upper rail 42, the upper rail 42 is disposed under the bracket, and thus, in a state in which the bracket is fixed to the upper rail 42, attachment and detachment work of the first cover may be difficult. Further, for example, in an alternative embodiment in which the bracket is fixed to a lower surface of the pan frame 15, the pan frame 15 is disposed above the bracket, and thus, in a state in which the bracket is fixed to the pan frame 15, attachment and detachment work of the second cover may be difficult. Since a member to which the bracket 200 is fixed is not disposed above or below the bracket 200, even in a state in which the bracket 200 is fixed to the upper rails 42, attachment and detachment work of the first cover 310 and the second cover 320 is facilitated.

Since the maximum dimension D1 of the bulging portion 222 of each second bracket wall 220 in the up-down direction is larger than the maximum dimensions D2 and D3 of the side portions 223 and 224 in the up-down direction, rigidity of portions of the bracket 200 positioned frontward and rearward of the cover 300 is improved. Specifically, rigidity in the vicinity of the bulging portions 222 of the bracket 200 is improved.

Since the first cover 310 and the second cover 320 are each positioned within the width of the bracket 200 in the front-rear direction, the cover 300 is made compact in the front-rear direction.

Since the second cover 320 includes the first lock tabs 322 protruding in the left-right direction and engaged with the bracket 200 and the bosses 323 protruding downward and fitted in holes of the bracket 200, a position of the second cover 320 in the front-rear direction and the left-right direction with respect to the bracket 200 is restricted.

Since the bosses 323 have the cross-shaped cross section, rigidity of the bosses 323 is improved.

Since the portion of the first cover 310 is fitted between the end portions of the pair of hooks 324 of the second cover 320, deformation of the end portions of the pair of hooks 324 in the direction approaching each other is suppressed by the first cover 310. Thus, detachment of the second cover 320 from the bracket 200 is suppressed.

Since the motor 100 includes the projecting piece 111 protruding downward and the first cover 310 has the cover hole 316 in which the projecting piece 111 is fitted, a position of the first cover 310 in the front-rear direction and the left-right direction with respect to the motor 100 is restricted.

Since the mounting holes 221 of the second bracket walls 220 extend through the corresponding second bracket walls 220 in the front-rear direction crossing an attachment direction (the up-down direction) of the first cover 310 and the second cover 320, when the first cover 310 and the second cover 320 are attached and detached, detachment of the harness clip 52 from the mounting holes 221 is suppressed.

Although the embodiment has been described above, the vehicle seat can be appropriately modified and implemented as exemplified below.

In the embodiment, the portion of the first cover 310 is fitted between the end portions of the pair of hooks 324 of the second cover 320. However, for example, the first cover does not need to be fitted between the end portions of the pair of hooks of the second cover.

In the embodiment, the second cover 320 includes the hooks 324 engaged with the bracket 200. However, for example, the bracket may include hooks engaged with the second cover. The second cover may have openings with which hooks of the bracket are engaged.

In the embodiment, the second cover 320 covers the engaging portions 312 of the first cover 310. However, for example, the second cover does not need to cover the engaging portions of the first cover.

In the embodiment, the first cover 310 is fixed to the bracket 200 by the engaging portions 312. However, for example, the first cover may be fixed to the bracket by a fastener such as a screw. When the first cover includes engaging portions, before the first cover is fixed to the bracket by the fastener, the engaging portions may function as temporary fastening portions of the first cover. Thus, fixing work of the first cover by the fastener is facilitated. Further, the first cover may not include engaging portions and may be fixed to the bracket only by the fastener.

In the embodiment, the first cover 310 includes the engaging portions 312 configured to engage with the bracket 200. However, for example, the bracket may include engaging portions engaged with the first cover. The first cover may include openings with which engaging portions of the bracket are engaged.

In the embodiment, the first cover 310 and the second cover 320 are each positioned within the width of the bracket 200 in the front-rear direction. However, for example, the first cover may have a front end positioned frontward of the front end of the bracket. Further, the first cover may have a rear end positioned rearward of the rear end of the bracket. The same applies to the second cover.

In the embodiment, the bosses 323 of the second cover 320 have the cross-shaped cross section. However, for example, the bosses may have a cylindrical shape.

In the embodiment, the motor 100 is fixed to the bracket 200 in a state of being disposed in the bracket hole 211. However, for example, the motor may be fixed to the bracket in a state of being disposed above or below the first bracket wall.

In the embodiment, the maximum dimension D1 of the bulging portion 222 in the up-down direction is larger than the maximum dimensions D2 and D3 of the side portions 223 and 224 in the up-down direction for each of the second bracket walls 220. However, for example, the second bracket walls may have an up-down dimension that is substantially the same from the left end to the right end.

In the embodiment, the "perpendicular direction" is the up-down direction. However, for example, the "perpendicular direction" may be the front-rear direction. When the "perpendicular direction" is the front-rear direction, the bracket hole may, for example, extend through the bracket in the front-rear direction. Further, in the embodiment, the "axial direction" is the left-right direction. However, for example, the "axial direction" may be the front-rear direction or the up-down direction. Further, the "axial direction" may be inclined with respect to the horizontal direction or may be inclined with respect to the vertical direction.

In the embodiment, the first cover 310 covers the lower portion of the motor 100 and the second cover 320 covers the upper portion of the motor 100. However, for example, the first cover may cover the upper portion of the motor and the second cover may cover the lower portion of the motor. Further, for example, the first cover may cover one of the front portion and the rear portion of the motor and the second cover may cover the other of the front portion and the rear portion of the motor.

In the embodiment, the motor 100 is a motor configured to drive the slide mechanism SL. However, for example, the motor may be a motor configured to drive the tilt mechanism TL. Further, for example, the motor may be a motor configured to drive a reclining mechanism supporting a seat back in a manner that allows the seat back to swing in the front-rear direction.

In the embodiment, the vehicle seat is the car seat S mounted on an automobile. However, the vehicle seat may be a vehicle seat mounted on a vehicle other than an automobile, for example, a railway car, a ship, an aircraft, or the like.

Elements described in the embodiment and its modifications may be implemented selectively and in combination.

## Claims

1. A vehicle seat, comprising:
a motor (100);
a bracket (200) to which the motor (100) is fixed; and
a cover (300) configured to cover the motor (100),
wherein the cover (300) comprises:
a first cover (310) configured to cover a portion of the motor (100) on one side of the motor (100) in a perpendicular direction perpendicular to an axial direction along which a rotary shaft (120) of the motor (100) extends; and
a second cover (320) configured to cover a portion of the motor (100) on another side of the motor (100) in the perpendicular direction,
wherein the first cover (310) and the second cover (320) are fixed to the bracket (200).

2. The vehicle seat according to claim 1, wherein
the first cover (310) comprises an engaging portion (312) configured to engage with the bracket (200), and
the second cover (320) covers the engaging portion (312).

3. The vehicle seat according to claim 1, wherein the first cover (310) is configured to cover a lower portion of the motor (100), and the second cover (320) is configured to cover an upper portion of the motor (100).

4. The vehicle seat according to claim 3, wherein
the bracket (200) extends in a left-right direction and has a bracket hole (211) extending through the bracket (200) in an up-down direction, and
the motor (100) is received in the bracket hole (211).

5. The vehicle seat according to claim 4, further comprising:
a slide mechanism (SL) configured to support a seat body (S0) on which an occupant is seated in a manner that allows the seat body (S0) to move in a front-rear direction,
wherein the motor (100) is configured to drive the slide mechanism (SL), and
wherein the slide mechanism (SL) comprises:
left and right lower rails (41) fixed to a floor of a vehicle; and
left and right upper rails (42) slidably supported by the left and right lower rails (41), and
wherein the bracket (200) is fixed to and bridges the left and right upper rails.

6. The vehicle seat according to claim 5,
wherein the bracket (200) comprises:
a first bracket wall (210) having the bracket hole (211); and
second bracket walls (220) configured to extend downward from a front end and a rear end of the first bracket wall (210), respectively, and
wherein a maximum dimension (D1) in the up-down direction of a portion of each of the second bracket walls that overlap the cover as viewed in the front-rear direction is larger than a maximum dimension (D2, D3) in the up-down direction of a portion of each of the second bracket walls that do not overlap the cover as viewed in the front-rear direction.

7. The vehicle seat according to claim 5, wherein the first cover (310) and the second cover (320) are positioned within a width of the bracket (200) in the front-rear direction.

8. The vehicle seat according to claim 5, wherein the second cover (320) comprises:
a first lock tab (322) protruding in a left-right direction and engaged with the bracket (200), the first lock tab (322) being positioned at an end portion of the second cover (320) on one side in the left-right direction; and
a boss (323) protruding downward and fitted in a hole (214) in the bracket (200), the boss (323) being positioned at an end portion of the second cover (320) on another side in the left-right direction.

9. The vehicle seat according to claim 8, wherein the boss (323) has a cross-shaped cross section.

10. The vehicle seat according to claim 5, wherein
the second cover (320) comprises a first hook and a second hook (324, 324) protruding downward, the first hook and the second hook (324, 324) each comprising a second lock tab (324A, 324A) at an end portion thereof,
the second lock tab (324A) of the first hook (324) protrudes in a direction away from the second hook (324) and is engaged with the bracket (200), and
the second lock tab (324A) of the second hook (324) protrudes in a direction away from the first hook (324) and is engaged with the bracket (200), and
a portion of the first cover (310) is fitted between the first hook and the second hook (324, 324).

11. The vehicle seat according to claim 5, wherein
the motor (100) includes a projecting piece (111) protruding downward, and
the first cover (310) has a cover hole (316) in which the projecting piece (111) is fitted.
